# EUROPEAN PATENT SPECIFICATION

(11) **EP 2 410 245 B1**
(45) Date of publication and mention of the grant of the patent: **19.10.2016**
(21) Application number: 11174607.9
(22) Date of filing: 20.07.2011
(51) Int. Cl.: F24C 3/00, F28D 15/02

(54) **Heating apparatus using a diathermic fluid**
Heizvorrichtung mit diathermischer Flüssigkeit
Appareil de chauffage utilisant un fluide de diathermie

(30) Priority: 22.07.2010 IT VR20100150
(43) Date of publication of application: 25.01.2012
(73) Proprietor: Simeoni, Michela, 37121 Verona (VR) (IT)
(72) Inventor: Simeoni, Michela, 37121 Verona (VR) (IT)
(74) Representative: Fisauli, Beatrice A. M.

(56) References cited:
- GB-A- 1 431 235
- US-A- 3 853 112
- US-A- 4 410 030
- US-A1- 2008 173 260

## Description

The present invention refers, in general, to an improved heating apparatus which uses a diathermic fluid. More particularly, it is a heating apparatus comprising a plane which is heated uniformly by using a diathermic fluid which is in touch with the same plane.

This invention is described below in relation to its use for cooking foods that are placed on its heated surface.

The kitchen and restaurant sectors, in fact, already make use of cooking systems that employ the use heated diathermic fluids in order to bring the cooking surfaces to the desired temperature.

These include, for example, cooking plates with the side opposite to the cooking surface in contact with a diathermic fluid. In this case, the fluid is heated using electrical resistances and is contained within a hermetic environment, thus operating under a vacuum.

This provides for the advantage of a uniformly heated cooking surface when the entire underside of the plate is placed in contact with the diathermic fluid. Since the resistances are not made to operate in the air, but are rather immersed in diathermic fluid contained within a hermetic environment, this technology provides for a reduction in heat loss, excellent energy yield and, therefore, a relative energy savings as well.

Diathermic fluid also possesses a thermal inertia that allows the temperature of the cooking surface to be maintained constant in a more precise and controlled manner.

One problem that has been encountered in relation to cooking apparatus that are heated using diathermic fluid is the possible swelling of the walls of the casing containing the diathermic fluid, and above all that of the cooking surface itself. This issue is due to the expansion of the diathermic fluid and, if the fluid is contained in a hermetic environment, the evaporation of the same. As a result, if the cooking surface should become curved due to the expansion, and above all evaporation, of the fluid, the diathermic fluid will no longer be able to remain in close contact with the surface itself, thus compromising the uniformity of its temperature.

Another problem in relation to known apparatus of this type has to do with the deterioration of the diathermic fluid and its relative properties. This deterioration is proportional to the temperature of the oil. Thus, the cooking surface must be made to reach a temperature high enough to allow for the proper cooking of the food, but must also be kept low enough to prevent the excessive deterioration of the diathermic fluid.

The use of fluid for cooking is also known by US 4,410,030 wherein a pressure cooker can regulate pressure over its range of cooking temperatures by regulating condensation and vaporization of contained water; and by US 3,853,112 where a working fluid vaporizes and condenses.

The main purpose of this invention is to develop a heating apparatus (a cooking apparatus, for example) that makes use of a diathermic fluid contained in a hermetic container for heating a given surface (a cooking surface, for example), the size and shape of which must be substantially similar to that of the hermetic container so as to ensure the uniform heating of the surface itself.

Another objective of this invention is to minimize the deterioration of the diathermic fluid by allowing the temperatures to reach levels that are suitable for the purposes of the apparatus itself (for the cooking of foods, for example), while keeping the temperatures low enough to prevent the excessive deterioration of the diathermic fluid.

These and other objectives can be obtained through the creation of a heating apparatus comprising a hermetic container with containment walls and containing a diathermic fluid that is placed in contact with at least one heat source for heating the fluid itself (for example, an electric heating resistance immersed within the diathermic fluid). One wall of the container has a first surface in contact with the diathermic fluid and a second surface, opposite to the first surface, which acts as a heating plane (a cooking surface, for example).

The apparatus features a closed chamber that communicates with the container and acts as a tank. This chamber is positioned above the container in such a way so that the fluid contained within the closed chamber flows into and fills the container. In this manner, when heated, the diathermic fluid, which entirely fills the container and partially fills the closed chamber, will remain in contact the heating plane without deforming it, as the expansion of the diathermic fluid itself will take place within the closed chamber. Likewise, in the event of a decrease in the fluid's volume, the fluid itself will still remain in contact the heating plane since the decrease in volume will take place within the closed chamber.

The evaporated diathermic fluid can be cooled and condensed within the closed chamber itself.

As an advantage, the closed chamber can include a box-shaped element to be connected to the container by means of a conduit, in order to separating the closed chamber, in which the fluid can expand and condense, from the container, in which the fluid is heated. Thanks to this detachment, the temperature of the fluid in the closed chamber will be significantly lower than that of the fluid in the container, thus preventing the fluid in the closed chamber from deteriorating.

Moreover, the closed chamber can include a closed conduit to be connected to the upper portion of the box-shaped element, which will serve as a condenser for the evaporated diathermic fluid.

As an advantage, the closed conduit may run upwards from the point in which it is connected to the box-shaped element, thus causing the condensed vapours to slide back down and drain into the box-shaped element. This objective can be obtained by designing the closed conduit on an incline with respect to a horizontal plane.

Moreover, the closed conduit can extend in a curvilinear fashion, thus allowing it to occupy less space and to remain close to the box-shaped element.

The box-shaped element can be equipped with a capped opening, which will allow for the box-shaped element itself, as well as the container, to be topped up with additional diathermic fluid.

In order to ensure the safety of the apparatus referred to in this invention, one or more vented safety valves can be connected to the upper and of the closed conduit, or rather the end opposite to that with which it connects to the box-shaped element.

As an advantage, the cooking surface can be inclined or tilted towards a basin for collecting any liquids which may be released from the foods during cooking.

For exemplary and non-exhaustive purposes, the invention's additional specifications and features are provided in greater detail within the description below, as well as within the attached drawings, which include:
- Figure 1: is a schematic view in perspective of an apparatus designed according to the invention;
- Figure 2: is a lateral view of the apparatus in figure 1;
- Figure 3: is a perspective view of the apparatus in figure 1, complete with a protective casing.

In reference to the attached drawings, the number 10 indicates a cooking apparatus comprised of a cooking surface 14, upon which foods of various natures can be heated when placed in special containers resting upon the cooking surface 14 or else cooked when placed in direct contact with the cooking surface 14 itself.

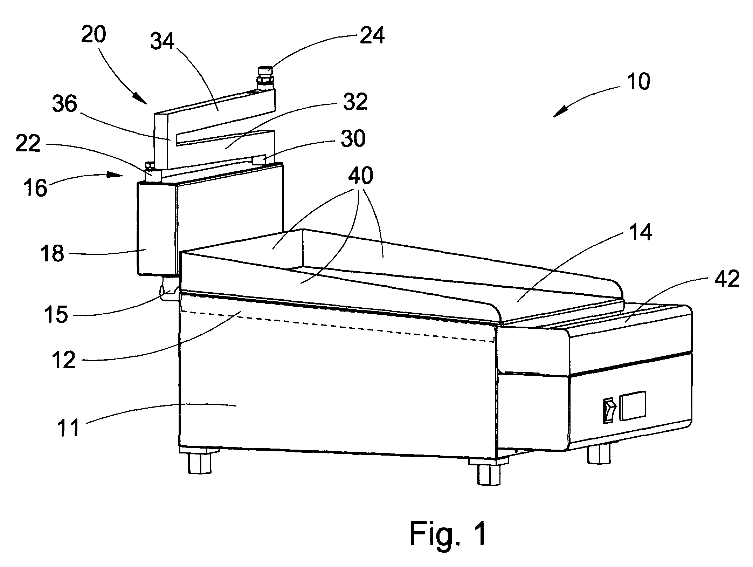

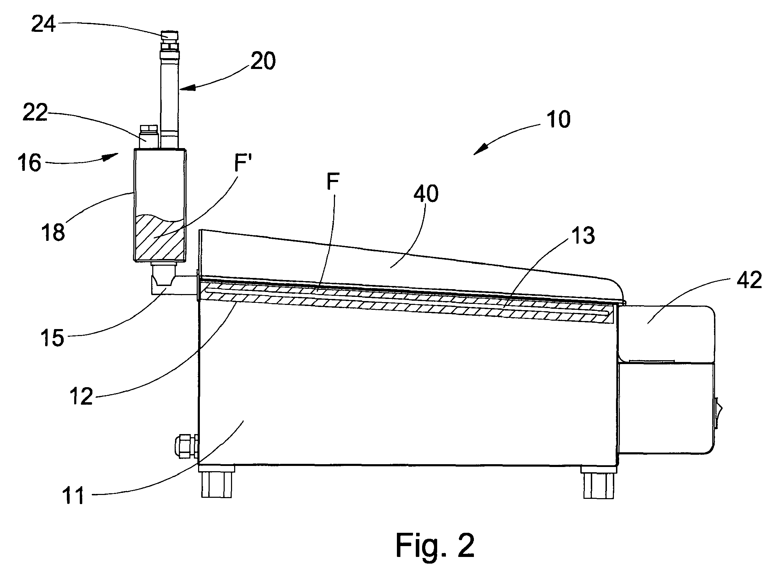

The apparatus 10 is made up of a support structure 11 that sustains a container 12, shown in figure 1 (shaded area) and figure 2, which in turn contains a diathermic fluid F that is heated by means of electric resistances 13. In particular, the cooking surface 14 corresponds to the upper surface of the container 12.

The base of the container 12 has ridges arranged in a defined direction and is welded to the supporting structure 11 in order to allow it to bulge upward or downward in the event that the same container 12 is subjected to stresses due an increase or decrease in the volume of the diathermic fluid F.

The rear portion of the container 12 is connected, by means of a conduit 15, to a closed chamber 16 with a box shaped element 18, which serves as a tank, and a closed conduit 20. The container 12, the box shaped element 18 and the closed conduit 20 create a hermetic environment.

The closed chamber 16 is positioned above the container 12 to which it is connected in order to allow all of the fluid poured into the box shaped element 18 to flow into and fill the container 12.

The box-shaped element 18 is equipped with a capped opening 22, which allows for the closed chamber 16, and therefore the container 12 as well, to be topped up with additional diathermic fluid.

When the resistances 13 are off, the user can pour additional diathermic fluid F to the box shaped element 18so as to bring the level of diathermic fluid in the container 12 into complete contact with the cooking surface 14, with a part of the fluid also remaining within the same box shaped element 18.

Subsequently, the user can turn on the circuits to which the resistances are connected in order to heat up the diathermic fluid in the container 12. In this manner, the electric resistances 13 will bring the diathermic fluid to the desired temperature, with the cooking surface 14, in turn, being heated by the diathermic fluid itself. This initial heating operation should be carried out with the filler cap open in order to allow the diathermic fluid to expand without subjecting the structure of the apparatus to any unnecessary stresses.

Once the desired temperature has been reached, the user closes the filler cap to create an entirely hermetic environment. The subsequent cooling of the fluid will result in a reduction in the volume of the fluid itself, thus causing the container 12 and the closed chamber 16 to operate under a vacuum.

The closed chamber 16, or more specifically, the box shaped element 18, acts as an expansion chamber for the diathermic fluid. In fact, when the temperature of the fluid increases, the fluid can expand into the same box shaped element 18 without putting any pressure upon the upper surface of the container 12, or rather the cooking surface 14.

Any increases or decreases in the volume of the diathermic fluid can even be compensated by the slight upward or downward bulges that are created in the base of the container 12.

The closed chamber 16 is also connected to the closed conduit 20 by means of a connecting sector 30.

The closed conduit 20 extends upward from the connecting sector 30 in order to allow the vapours of diathermic fluid to cool and condense.

In particular, a first section of conduit 32, which is connected to a second section of conduit 34 by means of a vertical tract 36, protrudes from the connecting sector 30. The first section 32 and the second section 34 of the conduit are slightly inclined, as shown in figure 1, in order to allow the condensed diathermic fluid to flow back downwards, or rather into the box shaped element 18. The compartmentalized structure of the closed conduit 20 allows for the closed conduit 20 itself to extend for a reasonable length, thus providing for the increased cooling of the vapours, while at the same time containing and reducing the encumbrance of the pipeline itself.

A relief valve 24 is installed at the closed end of the pipeline 20, or rather at the terminal portion of the second section 34, which allows the vapours to escape in the event that the pressure should exceed a certain value, thus preventing the structural failure of the apparatus 10 itself, as well as a number of other general issues relating to safety.

The conduit 15 connects the container 12 to the box shaped element 18 in such a way so as to better separate the container itself 12, in which the diathermic fluid is heated, from the closed chamber 16, in which the diathermic fluid is free to expand.

In this manner, the conduit 15 makes it more difficult for the diathermic fluid to flow between the container 12, in which the fluid is at an optimal temperature for heating the cooking surface 14, and the closed chamber 16, in which the fluid is at a significantly lower temperature, thus preventing the deterioration of the fluid itself and reducing the clogging of the valve 24.

This difference in temperature between the fluid in the container 12 and the fluid in the closed chamber 16 facilitates the initial condensation of the fluid itself when passing from the container 12 into the closed chamber 16.

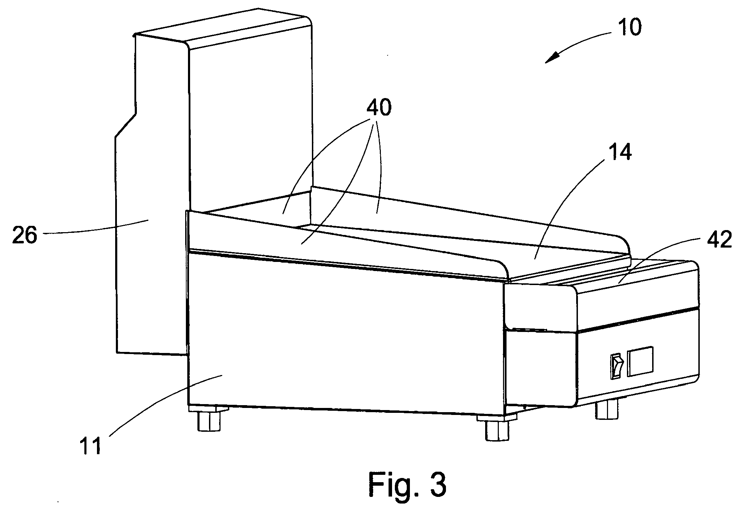

A protective casing 26, shown in figure 3, covers the entire closed chamber 16 in order to prevent the user from being burnt due to accidental contact with the box shaped element 18 or the closed conduit 20.

In order to facilitate the placement and preparation of foods, the cooking surface 14 is equipped with walls 40 on three sides, which serve to prevent the food items from sliding off the cooking surface itself 14.

Moreover, the cleaning of the apparatus 10 is simplified by the fact that the cooking surface is slightly inclined towards the side where no wall 40 is present. A basin 42 is also installed on this same side in order to collect any liquids that may be released from the foods during cooking.

As previously indicated, the method for constructing the invention described above refers to a cooking apparatus. It must, however, be understood that the invention can also be used for a variety of other apparatus for which the uniform heating of a surface is required.

A field technician may provide for various modifications and alterations to the apparatus as described and illustrated herein, thus obtaining new solutions, which are nevertheless to be considered within the scope of the invention's protection, as further defined by the special characteristics described in the following claims.

## Claims

1. Heating apparatus (10) for a plane, comprising:
- a hermetic container (12) with containing walls, containing a diathermic fluid (F), and
- at least a heat source (13), adapted to heat said fluid;
a wall of the container having a first surface in touch with the diathermic fluid (F) and a second surface, opposite to the first surface, acting as a heating plane (14), said heating apparatus (10) being **characterized in that** it comprises a closed chamber (16) communicating with the container (12), which closed chamber (16) develops upward in respect to said container (12) so that the fluid contained in said closed chamber (16) flows to the container (12) to fill the container (12) itself, and that the diathermic fluid (F'), contained in said closed chamber (16), can expand and reduce its volume and the vapors of the diathermic fluid are cooled and condensed; wherein the diathermic fluid entirely fills the container (12) and partially fills the closed chamber (16); the diathermic fluid remaining in contact with the heating plane (14) without deforming it, as the expansion of the diathermic fluid itself takes place within the closed chamber (16); likewise, in the event of a decrease in the volume of the diathermic fluid, the diathermic fluid itself remaining in contact with the heating plane (14), since the decrease in volume takes place within the closed chamber (16).

2. Heating apparatus (10) according to claim 1, wherein the closed chamber (16) comprises a box-shaped element (18) which is connected through a duct (15) with the container (12) and is adapted to contain the exceeding diathermic fluid (F') coming from the container (12).

3. Heating apparatus (10) according to any of the preceding claims, wherein the closed chamber (16) comprises a closed conduit (20) connected on the upper part with the box-shaped element (18).

4. Heating apparatus (10) according to claim 3, wherein the closed conduit (20) develops upwards from a connecting sector (30), connected with the box-shaped element (18), so that the condensed vapors slip downwards and are exhausted in said box-shaped element (18).

5. Heating apparatus (10) according to claim 3 or 4, wherein the closed conduit (20) is inclined in comparison with a horizontal plane.

6. Heating apparatus (10) according to claim 5, wherein the closed conduit (20) develops according to a curvilinear outline so as to take a more compact volume close behind the box-shaped element (18).

7. Heating apparatus (10) according to any of claims 2 to 6, wherein an opening is obtained in the box-shaped element (18) and is closable with a stopper (22), said opening being used to fill the box-shaped element (18) and the container (12) with the diathermic fluid.

8. Heating apparatus (10) according to any of claims 3 to 6, wherein at least a safety valve (26) with breather pipe is connected with an end (38) of the closed conduit (20), said end being opposite to the connecting sector (30).

9. Heating apparatus (10) according to any of the preceding claims, wherein the heating plane (14) is inclined and sloping toward a basin (42) in which the liquids released from the cooking of food are collected.

10. Heating apparatus (10) according to any of the preceding claims, wherein the heat source is an electric resistance immersed in the diathermic fluid.

## Patentansprüche

1. Heizgerät (10) für eine Fläche, beinhaltend:
- einen hermetischen Behälter (12) mit umgebenden Wänden, der ein diathermisches Fluid (F) enthält, und
- mindestens eine Heizquelle (13), die geeignet ist, besagtes Fluid zu erwärmen;
wobei eine Wand des Behälters eine erste Oberfläche in Kontakt mit dem diathermischen Fluid (F) aufweist und eine zweite Oberfläche, der ersten Oberfläche gegenüberliegend, als eine Heizfläche (14) wirkt, wobei besagtes Heizgerät (10) **dadurch gekennzeichnet ist, dass** es eine geschlossene Kammer (16) beinhaltet, die mit dem Behälter (12) kommuniziert, diese geschlossene Kammer (16) sich im Verhältnis zu besagtem Behälter (12) in der Höhe entwickelt, sodass das in der besagten geschlossenen Kammer (16) enthaltene Fluid in den Behälter (12) fließt, um den Behälter (12) selbst zu füllen und dieses in besagter geschlossenen Kammer (16) enthaltene diathermische Fluid (F') sein Volumen ausdehnen und verringern kann und die Dämpfe des diathermischen Fluides gekühlt und kondensiert werden; wobei das diathermische Fluid den Behälter (12) vollständig ausfüllt und die geschlossene Kammer (16) teilweise ausfüllt; das diathermische Fluid in Kontakt mit der Heizfläche (14) bleibt, ohne diese zu verformen, da die Ausdehnung des diathermische Fluides selbst innerhalb der geschlossenen Kammer (16) stattfindet, gleichermaßen bleibt das diathermische Fluid im Fall einer Verringerung des Volumens des diathermischen Fluides in Kontakt mit der Heizfläche (14), da die Volumenverringerung in der geschlossenen Kammer (16) stattfindet.

2. Heizgerät (10) nach Anspruch 1, wobei die geschlossene Kammer (16) ein kastenförmiges Element (18) beinhaltet, das durch eine Leitung (15) mit dem Behälter (12) verbunden ist und geeignet ist, das vom Behälter (12) kommende überschüssige diathermische Fluid (F') zu enthalten.

3. Heizgerät (10) nach jedem der vorhergehenden Ansprüche, wobei die geschlossene Kammer (16) eine geschlossene Leitung (20) beinhaltet, die an der Oberseite mit dem kastenförmigen Element (18) verbunden ist.

4. Heizgerät (10) nach Anspruch 3, wobei sich die geschlossene Leitung (20) von einem Anschlussabschnitt (30), das mit dem kastenförmigen Element (18) verbunden ist, aufwärts entwickelt, sodass die kondensierten Dämpfe nach unten gleiten und sich in besagtem kastenförmigen Element (18) entleeren.

5. Heizgerät (10) nach Anspruch 3 oder 4, wobei die geschlossene Leitung (20) im Vergleich zu einer waagerechten Ebene geneigt ist.

6. Heizgerät (10) nach Anspruch 5, wobei die geschlossene Leitung (20) kurvenförmig verläuft, um so direkt hinter dem kastenförmigen Element (18) ein kompakteres Volumen anzunehmen.

7. Heizgerät (10) nach jedem der Ansprüche 2 bis 6, wobei eine Öffnung in dem kastenförmigen Element (18) erhalten wird und mit einem Verschluss (22) zu verschließen ist, besagte Öffnung dient dazu, das kastenförmige Element (18) und den Behälter (12) mit dem diathermischen Fluid zu befüllen.

8. Heizgerät (10) nach jedem der Ansprüche 3 bis 6, wobei mindestens ein Sicherheitsventil (26) mit Entlüftungsrohr mit einem Ende (38) der geschlossenen Leitung (20) verbindet ist, wobei sich besagtes Ende gegenüber dem Anschlussabschnitt (30) befindet.

9. Heizgerät (10) nach jedem der vorhergehenden Ansprüche, wobei die Heizfläche (14) geneigt ist und in Richtung eines Beckens (42) abfällt, in dem die vom Kochvorgang von Speisen abgegebenen Flüssigkeiten gesammelt werden.

10. Heizgerät (10) nach jedem der vorhergehenden Ansprüche, wobei die Heizquelle ein in dem diathermischen Fluid eingelassener elektrischer Heizwiderstand ist.

## Revendications

1. Appareil de chauffage (10) pour un plan, comprenant :
- un récipient hermétique (12) avec des parois de confinement, contenant un fluide diathermique (F), et
- au moins une source de chaleur (13), adaptée pour chauffer ledit fluide ; une paroi du récipient ayant une première surface en contact avec le fluide diathermique (F) et une seconde surface, opposée à la première surface, agissant comme un plan de chauffage (14), ledit appareil de chauffage (10) **caractérisé en ce qu'**il comprend une chambre fermée (16) communiquant avec le récipient (12), dont la chambre fermée (16) se trouve vers le haut par rapport audit récipient (12), de sorte que le fluide contenu dans ladite chambre fermée (16) circule vers le réservoir (12) pour remplir le récipient (12), et que le fluide diathermique (F ') contenu dans ladite chambre fermée (16) puisse se dilater et réduire son volume, et les vapeurs du fluide diathermique sont refroidies et condensées ; le fluide diathermique remplit entièrement le récipient (12) et remplit partiellement la chambre fermée (16) ; le fluide diathermique restant en contact avec le plan de chauffage (14) sans le déformer, puisque l'expansion du fluide diathermique lui-même a lieu dans la chambre fermée (16) ; de même, dans le cas d'une diminution du volume du fluide diathermique, le fluide diathermique restant en contact avec le plan de chauffage (14), puisque la diminution du volume a lieu dans la chambre fermée (16).

2. Appareil de chauffage (10) selon la revendication 1, dans lequel la chambre fermée (16) comprend un élément en forme de boîte (18), qui est relié par l'intermédiaire d'un conduit (15) au récipient (12) et qui est adapté pour contenir le fluide diathermique en excès (F') provenant du récipient (12).

3. Appareil de chauffage (10) selon l'une des revendications précédentes, dans lequel la chambre fermée (16) comprend un conduit fermé (20) relié à la partie supérieure de l'élément en forme de boîte (18).

4. Appareil de chauffage (10) selon la revendication 3, dans lequel le conduit fermé (20) se développe vers le haut à partir d'un secteur de connexion (30), relié à l'élément en forme de boîte (18), de sorte que les vapeurs condensées glissent vers le bas et soient évacuées dans ledit élément en forme de boîte (18).

5. Appareil de chauffage (10) selon la revendication 3 ou 4, dans lequel le conduit fermé (20) est incliné par rapport à un plan horizontal.

6. Appareil de chauffage (10) selon la revendication 5, dans lequel le conduit fermé (20) se développe selon un contour curviligne de manière à prendre un volume plus compact juste derrière l'élément en forme de boîte (18).

7. Appareil de chauffage (10) selon l'une des revendications 2 à 6, **caractérisé en ce qu'**une ouverture est obtenue dans l'élément en forme de boîte (18) et peut être fermée avec un bouchon (22), ladite ouverture étant utilisée pour remplir l'élément en forme de boîte ( 18) et le récipient (12) avec le fluide diathermique.

8. Appareil de chauffage (10) selon l'une quelconque des revendications 3 à 6, dans lequel au moins une soupape de sûreté (26) avec un tuyau d'aération est reliée à une extrémité (38) du conduit fermé (20), ladite extrémité étant opposée au secteur de connexion (30).

9. Appareil de chauffage (10) selon l'une des revendications précédentes, dans lequel le plan de chauffage (14) est incliné et en pente vers un bassin (42), dans lequel les liquides libérés par la cuisson des aliments sont collectés.

10. Appareil de chauffage (10) selon l'une des revendications précédentes, dans lequel la source de chaleur est une résistance électrique immergée dans le fluide diathermique.
